Europäisches Patentamt

European Patent Office

Office européen des brevets

(11) Veröffentlichungsnummer: **0 262 487**
**A1**

(12) **EUROPÄISCHE PATENTANMELDUNG**

(21) Anmeldenummer: 87113272.6

(22) Anmeldetag: 10.09.87

(51) Int. Cl.4: **H01R 13/453**

(30) Priorität: **19.09.86 DE 8625124 U**

(43) Veröffentlichungstag der Anmeldung:
**06.04.88 Patentblatt  88/14**

(84) Benannte Vertragsstaaten:
**AT BE CH DE FR GB IT LI LU NL SE**

(71) Anmelder: **Siemens Aktiengesellschaft Berlin
und München
Wittelsbacherplatz 2
D-8000 München 2(DE)**

(72) Erfinder: **Kiesewetter, Reinhold
Bachvogelweg 5b
D-8056 Neufahrn(DE)**
Erfinder: **Thomfohrde, Heiner, Ing. grad.
Flurstrasse 9
D-8021 Hohenschäftlarn(DE)**

(54) **Elektrische Kontaktiervorrichtung mit Kontaktschutzeinrichtung.**

(57) Bei einem Handfunkgerät befindet sich der Anschlußkontakt zur Kontaktierung des Ladegerätes für die eingebaute Batterie im Inneren des Gehäuses des Handfunkgerätes und ist durch Klappen verdeckt. Beim Auftreffen des aus dem Ladegerät hervorragenden Gegensteckers auf die Zuhaltungen der Öffnung des Handfunkgerätes werden diese klappenförmigen Abdeckelemente automatisch geöffnet. In einem Ausführungsbeispiel werden zur Öffnung der Klappen Hilfsstifte benutzt.

FIG 1

EP 0 262 487 A1

## Elektrische Kontaktiervorrichtung mit Kontaktschutzeinrichtung

Die Erfindung bezieht sich auf eine elektrische Kontaktiervorrichtung mit Kontaktschutzeinrichtung, insbesondere für die Stromversorgung bewegbarer nachrichtentechnischer Geräte.

Bei wiederaufladbaren Stromversorgungen von elektrischen Geräten, insbesondere hier im Beispiel von Handfunkgeräten für Funktelefone, soll der Anschluß zum Ladegerät verdeckt und geschützt angeordnet sein.

Der Erfindung liegt die Aufgabe zugrunde, eine Verriegelung anzugeben, die sich automatisch beim Auflegen des Handapparates auf die Ladevorrichtung entriegelt.

Erfindungsgemäß wird dies dadurch erreicht, daß der einzelne Kontaktstift des Gerätes im Inneren seines Gehäuses hinter federnden Verschlußstücken befestigt ist, die beim Einstecken eines herausragenden Kontaktgegenstückes der Stromzuführungseinrichtung zunächst automatisch geöffnet werden und im weiteren Verlauf des Steckvorganges den Zugang für den nachfolgenden Kontaktiervorgang freigeben.

Weitere vorteilhafte Ausgestaltungen der Erfindung finden sich in den Unteransprüchen.

Nachstehend wird die Erfindung anhand von in den Figuren dargestellten Ausführungsbeispielen näher erläutert.

Die Figur 1 zeigt ein Ausführungsbeispiel mit federvorgespannten Klappen vor der Kontaktierung.

Die Figur 1a zeigt das gleiche nach der Kontaktierung.

Ebenso bezeichnen bei den folgenden Figuren die Figuren a jeweils den kontaktierten Zustand.

Figur 2 zeigt ein Ausführungsbeispiel mit verschiebbaren Lappen als Abdeckung.

Die Figuren 3 und 4 zeigen Abdeckungen aus elastischem Material in Lappenform.

Die Figur 5 zeigt eine Ausführung, bei der ein Hilfsstift vorher die Klappen öffnet.

Bei den Figuren sind jeweils nur Teilabschnitte der beiden Gehäuse für das Funkgerät 2 und die Ladeeinrichtung 5 dargestellt, die die wichtigen Einzelheiten für die Kontaktierung zeigen.

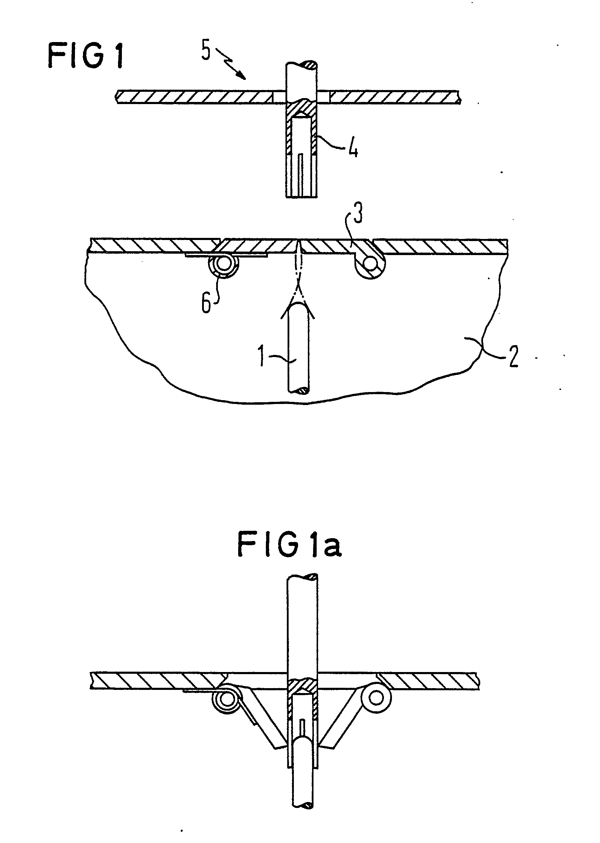

Bei der Figur 1 ist oben das Ladegerät 5 dargestellt, das einen aus dem Ladegerät isoliert hervorragenden Anschlußstecker 4 hat. Dieser Stecker kann koaxial wie üblich oder auch mehrpolig ausgebildet sein. Das Gegenstück am Handapparat 2 zeigt einen verdeckt angeordneten, hinter Klappen 3 befindlichen Stecker 1. Dieser ist hier als Vaterstecker ausgebildet. Die Abdeckung besorgen Klappen 3, die auch mehrfach um die Öffnung für den Stecker 4 herum angeordnet sein können. Die Klappen sind scharnierförmig am Rande gehalten und über Federn so verspannt, daß sie im Ruhezustand die Öffnung in der Wand des Handapparates 2 abdecken.

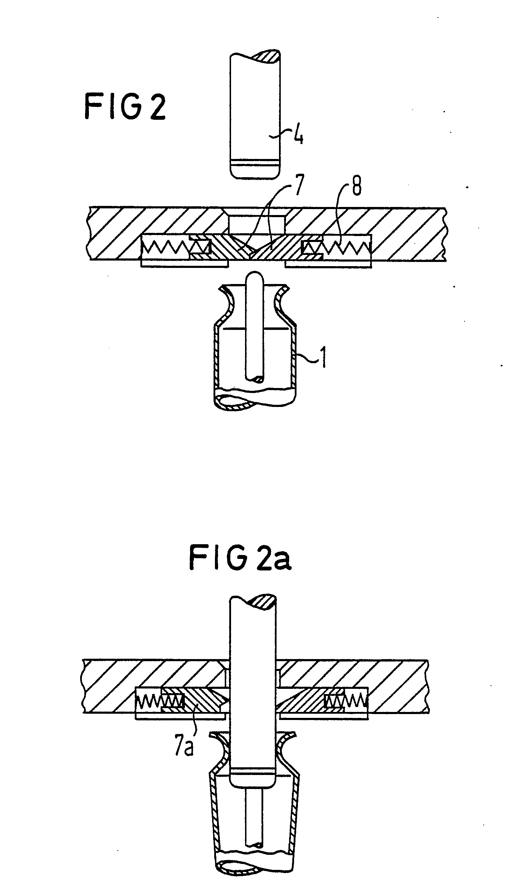

Die Figur 2 zeigt ein Ausführungsbeispiel, bei dem die Abdeckklappen als Schiebestücke 7 ausgebildet sind. Gegen die Steckrichtung für den Stecker 4 am Ladegerät hin sind diese Lappen keilförmig angeschrägt und ferner sind sie gegeneinander durch Federn 8 im Gehäuse des Handapparates verspannt. Zweckmäßig ist zur guten Abdichtung der eine Lappen mit einer Nut gegen die Gehäuseaußenwand versehen, in die der Keil des anderen Lappens eingreift. Wird der Handapparat auf das Ladegerät aufgelegt, so drückt der Stecker 4 die Lappen 7, 7a auseinander, wodurch der Weg für die Kontaktierung freigegeben wird.

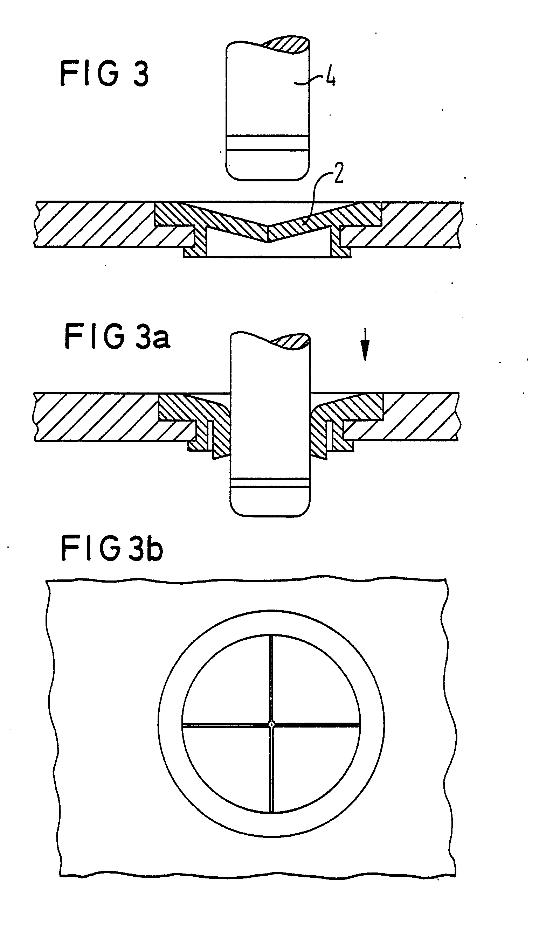

Die Figur 3 zeigt ein Ausführungsbeispiel, bei dem die Lappen 8 als elastisch federnde Elemente, zum Beispiel aus Siliconmaterial, ausgebildet sind. Zweckmäßig ist das gesamte Verschlußstück, das aus mehreren segmentartig unterteilten Lappen besteht, als Pfropfen ausgebildet, der in die entsprechende Öffnung des Handapparates einfach eingepreßt werden kann und mittels flanschartiger Ansätze in dieser Öffnung gehalten wird. In der Ansicht A der Figur 3b sind vier Kreissegmente im geschlossenen Zustand dargestellt. Es könnte jedoch auch eine andere Unterteilung getroffen sein.

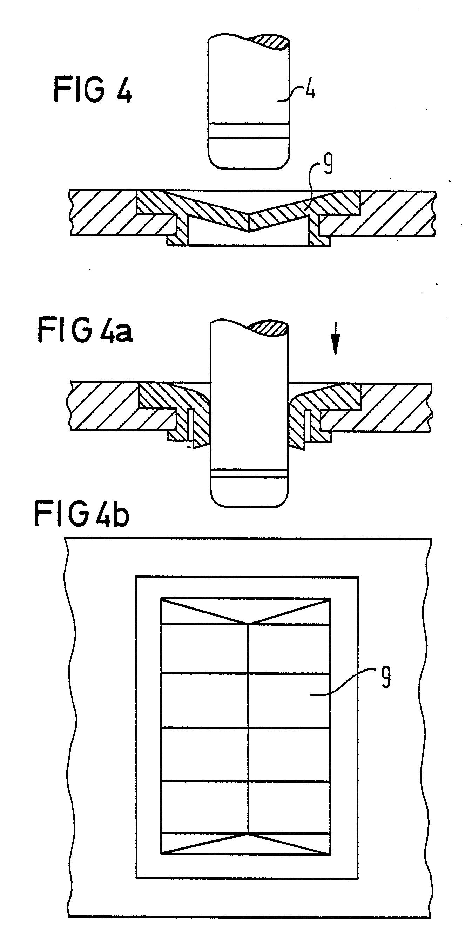

Die Figur 4 zeigt ein Ausführungsbeispiel, das insbesondere für mehrpolige Stecker geeignet ist. Dabei sind die elastischen Lappen 9 rechteckig ausgebildet. Sie sind, je nach der beanspruchten Breite der Steckvorrichtung, mehrfach gefiedert.

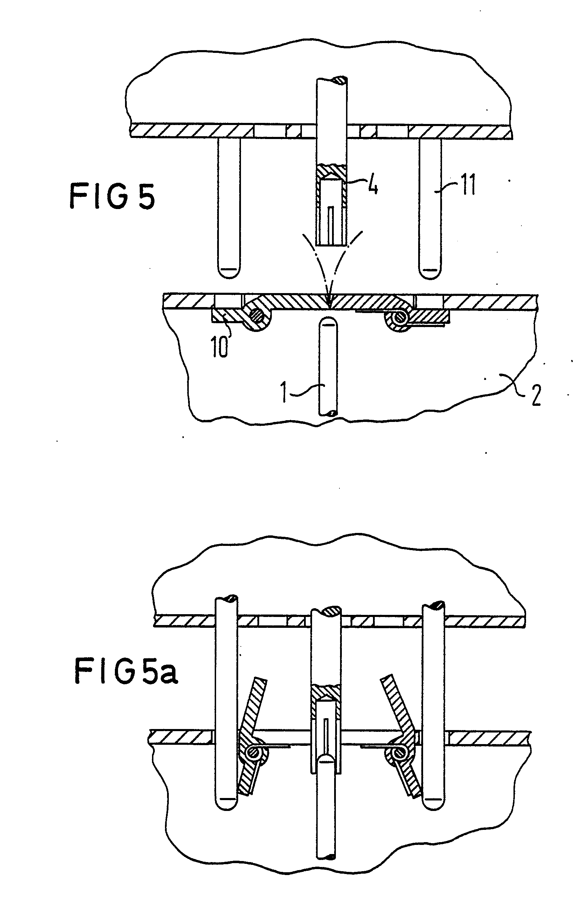

Schließlich zeigt die Figur 5 ein Ausführungsbeispiel, bei dem scharnierförmig und federvorgespannte Klappen mit zweiten innenliegenden Lappen 10 ähnlich einer Flügeltür gelagert sind. In diesem Aus führungsbeispiel besorgt nicht der Stecker 4 selbsttätig die Öffnung, sondern zum Schutz dieses Steckers sind im gezeigten Ausführungsbeispiel zwei seitwärts angeordnete Stifte 11 vorgesehen, die über den Stecker 4 hinausragen und voreilend zunächst auf die zweiten Flügel 10 der Zuhaltungen treffen und dadurch die eigentlichen Klappen öffnen. Diese Ausführung bildet noch eine besondere Art des Kontaktschutzes.

## Ansprüche

1. Elektrische Kontaktiervorrichtung mit Kontaktschutzeinrichtung, insbesondere für die Stromversorgung bewegbarer nachrichtentechnischer Geräte, **dadurch gekennzeichnet**, daß der einzelne Kontaktstift (1) des Gerätes (2) im Inneren seines Gehäuses hinter federnden Verschlußstücken (3) befestigt ist, die beim Einstecken eines herausragenden Kontaktgegenstückes (4) der Stromzuführungseinrichtung (5) zunächst automatisch geöffnet werden und im weiteren Verlauf des Steckvorganges den Zugang für den nachfolgenden Kontaktiervorgang freigeben.

2. Kontaktiervorrichtung nach Anspruch 1, **dadurch gekennzeichnet**, daß die Verschlußstücke als scharnierartige Klappen (3) ausgebildet sind, die durch Federn (6) im Ruhezustand geschlossen gehalten werden. (Fig. 1)

3. Kontaktiervorrichtung nach Anspruch 1, **dadurch gekennzeichnet** , daß die Verschlußstücke als seitwärts im Gehäuse verschiebbar gelagerte federverspannte keilförmige Elemente (7) ausgebildet sind. (Fig. 2)

4. Kontaktiervorrichtung nach Anspruch 2, **dadurch gekennzeichnet**, daß die Klappen als elastisch federnde Lappen (8) ausgebildet sind, die Kreissektoren bilden. (Fig. 3)

5. Kontaktiervorrichtung nach Anspruch 2, **dadurch gekennzeichnet** , daß die Klappen als elastisch federnde mehrfach nach Art einer Fiederung unterteilte Lappen (9) ausgebildet sind. (Fig. 4)

6. Kontaktiervorrichtung nach Anspruch 2, **dadurch gekennzeichnet**, daß um das herausragende Kontaktstück (4) am Stromversorgungsgerät herum kontaktlose Stifte (10) mit größerer Höhe als der Kontaktstift (4) angeordnet sind und die Klappen um das Scharnier mit einem zweiten Flügel (10) versehen sind, so daß beim voreilenden Auftreffen der kontaktlosen Stifte (11) auf die zweiten Flügel (10) zunächst die Klappen öffnen und den Weg für die Kontakte freigeben. (Fig. 5)

FIG 1

FIG 1a

# FIG 2

# FIG 2a

FIG 3

4

2

FIG 3a

FIG 3b

**FIG 4**

**FIG 4a**

**FIG 4b**

FIG 5

FIG 5a

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-2 315 569 (SIEMENS) <br> * Anspruch; Figur 1 * <br> --- | 1,3 | H 01 R 13/453 |
| A | GB-A-2 149 978 (A.F. BULGIN & CO. PLC) <br> * Seite 1, Zeile 117 - Seite 2, Zeile 21; Figur 2 * <br> --- | 1,2,6 | |
| A | DE-C- 948 428 (SIEMENS) <br> * Seite 2, Zeilen 67-71; Figur 3 * <br> --- | 4 | |
| A | DE-C- 950 206 (SIEMENS) <br> * Figur 1 * <br> --- | 4 | |
| A | US-A-4 558 270 (J.P. LIAUTAUD et al.) <br> * Spalte 1, Zeilen 8-18 * <br> ----- | 1 | |

**RECHERCHIERTE SACHGEBIETE (Int. Cl.4)**

H 01 R    13/00
H 02 J     7/00
H 04 M     1/00
H 02 B     1/00

Der vorliegende Recherchenbericht wurde für alle Patentansprüche erstellt

| Recherchenort | Abschlußdatum der Recherche | Prüfer |
|---|---|---|
| BERLIN | 26-11-1987 | LEOUFFRE M. |